# EUROPÄISCHE PATENTSCHRIFT

(11) **EP 0 876 531 B1**
(45) Veröffentlichungstag und Bekanntmachung des Hinweises auf die Patenterteilung: **04.10.2001**
(21) Anmeldenummer: 96934549.5
(22) Anmeldetag: 05.10.1996
(51) Int. Cl.: D06N 3/14, C08G 18/48, C08G 18/40

(54) **RECYCLINGFÄHIGER BODENBELAG**
RECYCLABLE FLOOR COVERING
REVETEMENT DE SOL RECYCLABLE

(30) Priorität: 15.12.1995 DE 19546881
(43) Veröffentlichungstag der Anmeldung: 11.11.1998
(73) Patentinhaber: WPT Witex Polymertechnologie GmbH, 32756 Detmold (DE)
(72) Erfinder: RICHTER, Dieter, D-33649 Bielefeld (DE)
(74) Vertreter: Patentanwälte Meinke, Dabringhaus und Partner
(86) Internationale Anmeldenummer: EP9604335
(87) Internationale Veröffentlichungsnummer: WO9722748

(56) Entgegenhaltungen:
- WO-A-95/14564
- DE-A- 2 446 214
- DE-A- 3 623 789
- GB-A- 1 272 069
- US-A- 3 499 783

## Beschreibung

Die Erfindung richtet sich auf einen recyclingfähigen Bodenbelag der zur Verwendung als Rollenware geeignet ist.

Bodenbeläge sind in sehr unterschiedlichen Gestaltungen bekannt. Neben Linoleum-Belägen sind Kunststoffbeläge oder Gummibeläge bekannt, wobei aus der WO 95/14564-A1 ein bahnenförmiger Belagwerkstoff aus einer verdichteten Mischung aus Gummiteilen, insbesondere Gummiabfällen, auf welche eine Schicht aus einer bereits anreagierten Mischung aus zerkleinerten Gummiabfällen und/oder Gummigranulat aufgebracht ist, wobei weitere Zuschlagsstoffe vorgesehen sein können, bekannt ist.

Im Stand der Technik sind weitere Lösungen bekannt. So beschreibt die GB-A-1 272 069 eine Schaumrücken-Beschichtung textiler Bodenbeläge, wie Teppiche oder ähnliche Produkte, sowie Linoleum oder andere elastische Produkte, um zu einer besseren Trittfreundlichkeit, Schalldämmung und Haltbarkeitsverlängerung zu kommen. Dabei wird ein PUR-Schaum eingesetzt. Es handelt sich um keinen eigenständigen, elastisch-schnappigen, homogenen Bodenbelag.

Die WO 95/14564 zeigt ein Herstellungsverfahren für Boden- und Wandbeläge auf Trägermaterialien mit PU-Bindemitteln in Verbindung mit Gummigranulat, während die DE-A-24 46 214 wiederum eine Schaumbeschichtung auf textilem Trägergewebe zeigt. Aus der US-A-3 499 783 ist es bekannt, Ausgleichsmassen z.B. auf Zementböden aufzubringen, um diese zu Egalisieren, wobei dort Zuschläge vorgesehen sind, um UV-lichtbedingte Verfärbungen zu reduzieren.

Aufgabe der Erfindung ist es, gegenüber den bekannten Fußbodenbelägen einen recyclingfähigen Bodenbelag in Bandware oder Rollenware zu schaffen auf der Basis von Polyurethan mit steuerbaren physikalischen Eigenschaften, wie etwa die Schnappigkeit, das Rückfedervermögen oder das Dämpfungsvermögen.

Bei einem Bodenbelag der eingangs bezeichneten Art wird diese Aufgabe nach Anspruch 1 dadurch gelöst, daß er aus einer ausreagierten Masse besteht, welche ausschließlich aus folgenden Bestandteilen gebildet worden ist.

### Komponente A:

| | | |
|---|---|---|
| a) | Polyetherpolyol | 1 - 10 % |
| b) | ein von Komponente a) unterschiedliches Polyethertriol als ein erstes modifiziertes Polyetherpolyol mit einem mittleren Molekulargewicht von 1.000 bis 10.000 | 5 - 25 % |
| c) | ein von Komponente a) unterschiedliches Polyethertriol als ein zweites modifiziertes Polyetherpolyol mit einem mittleren Molekulargewicht von 120 bis 1.200 | 2 - 20 % |
| d) | Polyestertriol mit einem Molekulargewicht von 200 bis 8000 als modifiziertes Polyesterpolyol | 0,00 bis 20 % |
| e) | Katalysatorkombination auf der Basis blockierter tertiärer Amine, metallorganische Salze bzw. Verbindungen | 0,05 - 2 % |
| f) | Trockenstoffpaste oder pulver | 0 bis 12 % |
| g) | Additive zur Beeinflussung der physikalischen und chemischen Eigenschaften gegebenenfalls | 0.00 bis 5 % |
| h) | Füllstoff | |

### Komponente B:

| | |
|---|---|
| 4,4'-Methylendi(phenylisocyanat), (MDI-)Prepolymer, MDI-Polymere oder Rein-MDI | 5 - 50 % |

Es hat sich gezeigt, daß ein so konzipierter Belag sich überraschenderweise als Rollenware herstellen läßt, wobei je nach Zuschlagstoffen auf die physikalischen Eigenschaften Einfluß genommen werden kann, wie z.B. auf die Abriebfestigkeit, das Anschmutzvermögen, die Dehnung oder die Reißfestigkeit.

Mit der Bezeichnung "MDI" ist 4,4'-Methylendi(phenylisocyanat) bzw. Diphenylmethan-4,4'-diisocyanat bezeichnet.

Weitere Einzelheiten und Ausgestaltungen ergeben sich aus den Unteransprüchen.

Zweckmäßig kann dabei ein Polyetherpolyol, ein erstes modifiziertes Polyetherpolyol, ein zweites modifiziertes Polyetherpolyol, ein modifiziertes Polyesterpolyol, eine Katalysatorkombination, eine Trockenstoffpaste oder Pulver, eine Additivkombination, ein Füllstoff, z.B. CaCo₃ oder andere, und ein MDI-Prepolymer, ein MDI-Polymer oder ein Rein-MDI vorgesehen sein.

Vorteilhaft wird als erstes modifziertes Polyetherpolyol ein Polyethertriol mit einem mittleren Molekulargewicht von 1.000 bis 10.000, insbesondere von 4.000 bis 8.000, eingesetzt wird, wobei als zweites modifiziertes ein Polyethertriol eingesetzt werden kann mit einem mittleren Molekulargewicht von 120 bis 1.200, insbesondere von 200 bis 800.

Erfindungsgemäß kann als Polyesterpolyol ein Polyestertriol mit einem Molekulargewicht von 200 bis 8.000, insbesondere von 1.500, eingesetzt werden.

Vorteilhaft werden tertiäre Amine, mit organischen oder anorganischen Säuren blockierte tertiäre Amine; metallorganische Salze bzw. Verbindungen auf der Basis von Sn, Fe, Hg, Zn, Pb, CO, Mn, vorzugsweise Kombinationen aus Sn, Zn sowie tertiären Aminen und ggf. mittels organischer oder anorganischer Säuren blockierte tertiäre Amine als Katalysatorkombinationen eingesetzt.

Zeolithe, Magnesiumoxid, Magnesiumhydroxid, Kalziumoxid und/oder Kalziumhydroxid können als Trockenmasse oder Pulver eingesetzt werden, als Additivkombination Polydimethylsiloxane als Oberflächenadditive, UV-Stabilisatoren, Zellregler, Antioxidantien und/oder Katalysatorregler.

Unter anderem um auch auf das optische Erscheinungsbild des Belages Einfluß zu nehmen, können neben anderen Füllstoffen auch Farbstoffe oder Pigmente, wie Titandioxid, Eisenoxid oder organische Pigmente eingesetzt werden, wie dies die Erfindung ebenfalls vorsieht.

Erfindungsgemäß kann auch vorgesehen sein, einen mehrschichtigen Belag zu konzipieren, wobei die einzelnen Belagschichten unterschiedliche physikalische Eigenschaften aufweisen.

Zur Herstellung eines solchen Belages werden die Komponenten A und B einer entsprechenden Bandanlage zugeführt, kurz zuvor gemischt, ausgetragen, mittels Wärme ausreagiert, wobei hier eine Reihe von Herstellungsverfahren und Anlagen eingesetzt werden können.

Erfindungsgemäß kann als Rein-MDI, 4,4 MDI oder 2,4 MDI, oder Gemische aus den beiden, oder Gemische von MDI-Prepolymer mit Rein-4,4 MDI oder mit 2,4 MDI eingesetzt werden, wobei ein MDI mit einer mittleren Funktionalität von 2,0 bis 2,6 eingesetzt wird, vorzugsweise 2,0 bis 2,12.

## Patentansprüche

1. Recyclingfähiger Bodenbelag, zur Verwendung als Rollenware geeignet, auf der Basis von Polyurethan, bestehend aus einer ausreagierten Masse, welche ausschließlich aus folgenden Bestandteilen gebildet worden ist:
| **Komponente A:** | | |
|---|---|---|
| a) | Polyetherpolyol | 1 - 10 % |
| b) | ein von Komponente a) unterschiedliches Polyethertriol als ein erstes modifiziertes Polyetherpolyol mit einem mittleren Molekulargewicht von 4.000 bis 10.000 | 5 - 25 % |
| c) | ein von Komponente a) unterschiedliches Polyethertriol als ein zweites modi iziertes Polyetherpolyol mit einem mittleren Molekulargewicht von 120 bis 800 | 2 - 20 % |
| d) | Polyestertriol mit einem Molekular gewicht von 200 bis 8000 als modifiziertes Polyesterpolyol | 0,00 bis 20 % |
| e) | Katalysatorkombination auf der Basis blockierter oder nicht-blockierter tertiärer Amine, metallorganischer Salze bzw. Verbindungen | 0,05 - 2 % |
| f) | Trockenstoffpaste oder -pulver | 0 bis 12 % |
| g) | Additiv-Kombination | 0.00 bis 5 % |
| h) | gegebenenfalls Füllstoff, nämlich Kalziumkarbonate, Aluminiumhydroxide, Kaoline, Quarzmehle, Ammoniumpolyphosphate, Siliciumkarbide, Aluminiumoxide, Bariumsulfat oder Talkum und als Farbstoffe bzw. Pigmente Titandioxid, Eisenoxid, Chromoxid und organische Pigmente | |
| **Komponente B:** | |
|---|---|
| 4,4'-Methylendi(phenylisocyanat), (MDI-)Prepolymer, MDI-Polymere oder Rein-MDI | 5 - 50 % |

2. Bodenbelag nach Anspruch 1,
**dadurch gekennzeichnet,**
**daß** als Polyetherpolyol ein Polypropylenglycol (PPG) oder ein Polytetramethylenetherglycol (PTMG) mit einem mittleren Molekulargewicht von 500 bis 4.000, insbesondere von 2.000, eingesetzt wird.

3. Bodenbelag nach Anspruch 1 oder 2,
**dadurch gekennzeichnet,**
**daß** als erstes modifiziertes Polyetherpolyol ein Polyethertriol mit einem mittleren Molekulargewicht von 4.000 bis 8.000, eingesetzt wird.

4. Bodenbelag nach einem der vorangehenden Ansprüche,
**dadurch gekennzeichnet,**
**daß** als zweites modifiziertes Polyetherpolyol ein Polyethertriol mit einem mittleren Molekulargewicht von 200 bis 800, eingesetzt wird.

5. Bodenbelag nach einem der vorangehenden Ansprüche,
**dadurch gekennzeichnet,**
**daß** als Polyesterpolyol ein Polyestertriol mit einem Molekulargewicht von 1.500 eingesetzt wird.

6. Bodenbelag nach einem der vorangehenden Ansprüche,
**dadurch gekennzeichnet,**
**daß** tertiäre Amine, mit organischen oder anorganischen Säuren blockierte tertiäre Amine; metallorganische Salze bzw. Verbindungen auf der Basis von Sn, Fe, Hg, Zn, Pb, CO, Mn, vorzugsweise Kombinationen aus Sn, Zn sowie tertiären Aminen und ggf. mittels organischer oder anorganischer Säuren blokkierte tertiäre Amine als Katalysatorkombinationen eingesetzt werden.

7. Bodenbelag nach einem der vorangehenden Ansprüche,
**dadurch gekennzeichnet,**
**daß** Zeolithe, Magnesiumoxid, Magnesiumhydroxid, Kalziumoxid und/oder Kalziumhydroxid als Trockenmasse oder pulver eingesetzt werden.

8. Bodenbelag nach einem der vorangegehenden Ansprüche,
**dadurch gekennzeichnet,**
**daß** als Bestandteile der Additivkombination Polydimethylsiloxane als Oberflächenadditive, UV-Stabilisatoren, Zellregler, Antioxidantien und/oder Katalysatorregler eingesetzt werden.

9. Bodenbelag nach einem der vorangehenden Ansprüche,
**dadurch gekennzeichnet,**
**daß** als Rein-MDI 4,4' MDI, 2,4' MDI oder Gemische aus den beiden oder Gemische von MDI-Prepolymer mit Rein-4,4' MDI oder mit 2,4' MDI eingesetzt werden.

10. Bodenbelag nach Anspruch 9,
**dadurch gekennzeichnet,**
**daß** im Mischungsbestandteil B ein MDI oder MDI-Prepolymer mit einer Funktionalität von 2,0 bis 2,6, vorzugsweise 2,0 bis 2, 12, eingesetzt wird.

11. Bodenbelag nach einem der vorangehenden Ansprüche,
**dadurch gekennzeichnet,**
**daß** er aus mehreren Belagbahnen unterschiedlicher physikalischer Eigenschaften gebildet wird.

## Claims

1. A recyclable floor covering, suitable for use as a rolled material, based on polyurethane, comprising a fully reacted material which has been formed exclusively from the following constituents:
| Component A: | | |
|---|---|---|
| a) | polyetherpolyol | 1 - 10% |
| b) | a polyethertriol different from component a) as a first modified polyetherpolyol of a mean molecular weight of 4000 to 10,000 | 5 - 25% |
| c) | a polyethertriol different from component a) as a second modified polyetherpolyol of a mean molecular weight of 120 to 800 | 2 - 20% |
| d) | polyestertriol of a molecular weight of 200 to 8000 as a modified polyesterpolyol | 0.00 to 20% |
| e) | catalyst combination based on blocked or non-blocked tertiary amines, metallo-organic salts or compounds | 0 05 - 2% |
| f) | dry material paste or powder | 0 to 12% |
| g) | additive combination | 0.00 to 5% |
| h) | possibly filler, namely calcium carbonates, aluminium hydroxides, kaolins, quartz dusts, ammonium polyphosphates, silicon carbides, aluminium oxides, barium sulphate or talc and as dyestuffs or pigments titanium dioxide, iron oxide, chromium oxide and organic pigments | |
| Component B: | |
|---|---|
| 4,4'-methylene di-(phenylisocyanate), (MDI-) pre-polymer, MDI-polymers or pure MDI | 5 - 50%. |

2. A floor covering according to claim 1 **characterised in that** the polyetherpolyol used is a polypropylene glycol (PPG) or a polytetramethylene ether glycol (PTMG) of a mean molecular weight of 500 to 4000, in particular of 2000.

3. A floor covering according to claim 1 or claim 2 **characterised in that** the first modified polyetherpolyol used is a polyethertriol of a mean molecular weight of 4000 to 8000.

4. A floor covering according to one of the preceding claims **characterised in that** the second modified polyetherpolyol used is a polyethertriol of a mean molecular weight of 200 to 800,

5. A floor covering according to one of the preceding claims **characterised in that** the polyesterpolyol used is a polyestertriol of a molecular weight of 1500.

6. A floor covering according to one of the preceding claims **characterised in that** tertiary amines, tertiary amines blocked with organic or inorganic acids; metallo-organic salts or compounds based on Sn, Fe, Hg, Zn, Pb, CO, Mn, preferably combinations of Sn, Zn, as well as tertiary amines and possibly tertiary amines blocked by means of organic or inorganic acids are used as catalyst combinations.

7. A floor covering according to one of the preceding claims **characterised in that** zeolites, magnesium oxide, magnesium hydroxide, calcium oxide and/or calcium hydroxide are used as dry material or powder.

8. A floor covering according to one of the preceding claims **characterised in that** as constituents of the additive combination polydimethylsiloxanes are used as surface additives, UV-stabilisers, cell regulators, anti-oxidants and/or catalyst regulators.

9. A floor covering according to one of the preceding claims **characterised in that** the pure MDI used is 4,4'-MDI, 2,4'-MDI or mixtures of the two or mixtures of MDI pre-polymer with pure 4,4'-MDI or with 2,4'-MDI.

10. A floor covering according to claim 9 **characterised in that** used in the mixture constituent B is an MDI or MDI pre-polymer with a functionality of 2.0 to 2.6, preferably 2.0 to 2.12.

11. A floor covering according to one of the preceding claims **characterised in that** it is formed from a plurality of covering webs of different physical properties.

## Revendications

1. Revêtement de sol recyclable pouvant être utilisé comme produit en rouleau, à base de polyuréthane, consistant en une masse qui a réagi, qui a été formée exclusivement à partir des constituants suivants :
| Composant A | | |
|---|---|---|
| a) | polyétherpolyol | 1 - 10 % |
| b) | un polyéthertriol différent du composant a) comme premier polyétherpolyol modifié ayant une masse moléculaire moyenne de 4000 à 10000 | 5 - 25 % |
| c) | un polyéthertriol différent du composant a) comme second polyétherpolyol modifié ayant une masse moléculaire moyenne de 120 à 800 | 2 - 20 % |
| d) | polyestertriol ayant une masse moléculaire de 200 à 8000 comme polyostorpolyol modifié | 0,00 à 20 % |
| e) | combinaison catalytique à base d'amines tertiaires bloquées ou non bloquées, de sels ou composés organométalliques | 0,05 - 2 % |
| f) | pâte sèche ou poudre | 0 à 12 % |
| g) | combinaison d'additifs | 0,00 à 5 % |
| h) | éventuellement charge, à savoir carbonates de calcium, hydroxydes d'aluminium, kaolins, poudres de quartz, polyphosphates d'ammonium, carbures de silicium, oxydes d'aluminium, sulfate de baryum ou talc et comme colorants ou pigments dioxide de titane, oxyde de fer, oxyde de chrome et pigments organiques | |
| Composant B : | |
|---|---|
| 4,4'-mathylènedi(phénylisocyanate), prépolymère de MDI, polymère de MDI ou MDI pur | 5 - 50 % |

2. Revêtement de sol selon la revendication 1 **caractérisé en ce que** l'on utilise comme polyétherpolyol un polypropylèneglycol (PPG) ou un polytétraméthylèneétherglycol (PTMG) ayant une masse moléculaire moyenne de 500 à 4000, en particulier de 2000.

3. Revêtement de sol selon la revendication 1 ou 2 **caractérisé en ce que** l'on utilise comme premier polyétherpolyol modifié un polyéthertriol ayant une masse moléculaire moyenne de 4000 à 8000.

4. Revêtement de sol selon l'une des revendications précédentes **caractérisé en ce que** l'on utilise comme second polyétherpolyol modifié un polyéthertriol ayant une masse moléculaire moyenne de 200 à 800.

5. Revêtement de sol selon l'une des revendications précédentes **caractérisé en ce que** l'on utilise comme polyesterpolyol un polyestertriol ayant une masse moléculaire de 1500.

6. Revêtement de sol selon l'une des revendications précédentes **caractérisé en ce que** l'on utilise des amines tertiaires, des amines tertiaires bloquées avec des acides organiques ou inorganiques, des sels ou composés organométalliques à base de Sn, Fe, Hg, Zn, Pb, CO, Mn, de préférence des combinaisons de Sn, Zn, aussi que des amines tertiaires et éventuellement des amines tertiaires bloquées avec des acides organiques ou inorganiques comme combinaisons catalytiques.

7. Revêtement de sol selon l'une des revendications précédentes **caractérisé en ce que** l'on utilise des zéolites, l'oxyde de magnésium, l'hydroxyde de magnésium, l'oxyde de calcium et/ou l'hydroxyde de calcium comme masse sèche ou poudre.

8. Revêtement de sol selon l'une des revendications précédentes **caractérisé en ce que** l'on utilise comme constituants de la combinaison d'additifs des polydiméthylsiloxanes comme additifs superficiels, des stabilisants aux UV, des régulateurs d'alvéoles, des antioxydants et/ou des régulateurs de catalyseur.

9. Revêtement de sol selon l'une des revendications précédentes **caractérisé en ce que** l'on utilise comme MDI pur du 4,4'-MDI, du 2,4'-MDI ou des mélanges des deux, ou des mélanges de prépolymère de MDI et de 4,4'-MDI pur ou de 2,4'-MDI.

10. Revêtement de sol selon la revendication 9 **caractérisé en ce que** l'on utilise dans le constituant du mélange B un MDI ou un prépolymère de MDI ayant une fonctionnalité de 2,0 à 2,6, de préférence de 2,0 à 2,12.

11. Revêtement de sol selon l'une des revendications précédentes **caractérisé en ce qu'**il est formé par plusieurs bandes de revêtement ayant des propriétés physiques différentes.
